# EUROPEAN PATENT APPLICATION

(11) **EP 3 421 667 A1**
(43) Date of publication of application: **02.01.2019**
(21) Application number: 17275094.5
(22) Date of filing: 27.06.2017
(51) Int. Cl.: E01D 15/133, G01M 5/00, E01D 15/12, E01D 101/40

(54) **MODULAR BRIDGE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates generally to a composite mobile bridge apparatus, and to a related method of managing (e.g. configuring) such an apparatus. There is provided a composite mobile bridge apparatus, comprising: at least two composite mobile bridge modules; wherein the modules are formed from fibre reinforced polymer composites, which composite comprises a fibre ply in a cured binder matrix.

## Description

The present invention relates generally to a composite mobile bridge apparatus, and to a related method of managing (e.g. configuring) such an apparatus.

A mobile bridge apparatus might be used in a wide variety of applications, ranging from temporarily bridging a river or the like in the event of a failure of a permanent bridge, all the way through to the need to quickly and effectively bridge a gap or other obstacle in a military environment. In all applications, the mobile bridge apparatus will have an associated lifetime, the lifetime being dependent on the use of the mobile bridge apparatus. Typically, the lifetime of the mobile bridge apparatus as a whole will be in some way assessed and determined in advance.

A problem with existing mobile bridge apparatus and related management methods is that the pre-determined assessment of lifetime may be crude. This could lead to unintentional and potentially dangerous bridge failure during use. In other examples, the pre-determined assessment of lifetime may be conservative, in order to avoid such problems. However, in this instance this may lead to the mobile bridge apparatus, or a part thereof, being maintained and/or replaced unnecessarily. Finally, any pre-determined assessment of bridge lifetime will likely take into account typical use of the mobile bridge apparatus, or modules thereof, in a typical environment. In reality, it is clearly plausible that "typical" will have very little bearing as to how the mobile bridge apparatus is used in reality, and this might be particularly the case when the mobile bridge apparatus is deployed in various different demanding environments, with spontaneous and yet sporadic heavy periods of use (e.g. loading).

Further problems with existing mobile bridge apparatus is that the modular units have a large mass, in order to withstand the forces applied by vehicles traversing over them.

It is an example aim of example embodiments of the present invention to at least partially obviate or mitigate one or more of the disadvantages mentioned above or elsewhere in the prior art, or to at least provide an alternative to existing mobile bridge apparatus and related methods.

According to the present invention there is provided a composite mobile bridge apparatus, comprising:
at least two composite mobile bridge modules; wherein the modules are formed from fibre reinforced polymer composites, wherein the composite comprises a fibre ply in a cured polymer binder matrix.

The apparatus may comprise a plurality of sensors for sensing a deformation of the mobile bridge modules. The deformation, for example, might comprise or be related to stress or strain.

The mobile bridge module may comprise at least two sensors at different locations of the mobile bridge module. Preferably there is a plurality of sensors located at all stress strain points within the composite structure.

The composite mobile bridge modules may comprise a plurality of ramp modules, and/or a plurality of inter-ramp modules, and wherein each ramp module, and/or each inter-ramp module, comprises one or more sensors.

In a preferred arrangement the sensor is embedded in, woven in, deposed on, the fibre ply. This allows the sensor to be located at multiple sites within each mobile bridge module, and to constantly monitor the structural health of said composite bridge module.

The mobile bridge module may comprise a metal connector, said connector may be bonded to the composite module by an adhesive, or a hybrid joint which is integral with the fibre ply. The connector may allow the connection between abutting composite bridge modules. Further there may be a fastener which secures and fastens two co-operative connectors together; such that wherein there is a first mobile bridge module comprises a first connector capable of co-operative engagement with a second connector on a second mobile bridge module, wherein the first and second connectors are metal. The first and second co-operative connectors may be secured together with a fastner.

In a preferred arrangement the composite bridge module may comprise a metal road surface, which provides a surface for a vehicle. Preferably the metal road surface is attached to the composite bridge by an adhesive, hybrid joint that is integral with the fibre ply.

Metals are still required for high tolerance surfaces, fire resistance, abrasion resistant surfaces, especially for high volume manufacture and low cost assembly. By combining composites and metals in a single structure, it is possible to gain advantage from each respective material which can lead to a great deal more design flexibility.

Hybrid joining may be defined as 'a method that makes use of multiple joining techniques such as mechanical interlocking and adhesive bonding'. Hybrid joints are able to offer improvements in a range of mechanical properties including, but not limited to, ultimate strength, durability and damage tolerance. Hybrid joints having simple projections anchored on a first metal component and extending through a second composite component are well suited to shear loading.

The method of manufacture may include the steps of pressing together the joint surfaces of the two components (metal connector/metal road surface with the composite bridge module) whereby to cause an array of pins or projections on the metal connector/upper surface, to penetrate through the fibre reinforcing material. Optionally it may be desirable to modify the effective cross sectional shape of the pins or projections, whereby to increase the constraint applied to the composite component against peeling of the composite component from the joint surface of the metal road surface or metal connector features.

The hybrid joint process may be executed during or following curing of the composite component. Alternatively, the process may be applied before curing, in order to apply a constraint, or compressive force, to a dry preform or preimpregnated (pre-preg) layup. Applying the process before curing the binder matrix facilitates simultaneous co-curing of the joint with the metal connector/upper surface features in place. This will usually result in a more secure joint, owing to the increased constraint applied by the additional adhesive bonding and the more precise dimensional tolerances achievable. A retaining feature such as metal mesh may be used to cap off the projections. Depending on the fibre plys chosen the metal mesh may have an additional advantage in that it may be used to provide a conductive path from the metal component to the fibre plys within the composite material. This may be used for damage detection in hybrid joints because the resistance between the mesh and metal component will change as pins in the joint become damaged or broken.

Conventional techniques for preparing fibre reinforced polymer composites (FRPs), involve the use of liquid resins, curing agents, optionally particulate fillers which are mixed and via resin transfer moulding(RTM) or vacuum assisted resin transfer moulding(VARTM) or pre-impregnation (prepreg) processes, and the resin matrix material is infused and encapsulates a fibre reinforcement material. The resultant laminate is then cured.

The fibre plys may be any commonly used fibres include carbon, E-glass, S2-glass, silica, and silicon carbide fibres. Examples of textile fibres include natural fibres such as cotton, and synthetic fibres which are typically polymer fibres such as nylon (RTM), UHMWPE, aramids, polypropylene, PTFE and polyester.

The binder matrix may be any curable resin binder, other binder matrix such as for example ceramic or glass based binder matrix may be used.

The binder matrix may further comprise a filler. The particulate filler may be selected from any commonly used particulate filler material, such as, for example, metals, metal alloys, metalloids, inorganic compounds, ceramics and nanoscale carbon particulates, such as, for example, carbon nanotubes, graphite, graphitic fillers, graphene nano-platelets. The particulate filler may be present in amount greater than 0.1%wt, preferably 0.5%wt, preferably greater than 1%wt, more preferably greater than 5%wt, even more preferably greater that 10%wt, preferably in the range of from 10%wt to 40%wt.

The use of CNTs as particulate fillers provides enhanced stiffness, strength, toughness, fatigue strength, properties, preventing the promulgation of cracks. They can also enhance electrical conductance, improve wear and also provide fire resistance properties. Furthermore CNTs, when presented at greater than 10% may provide significant thermal conductive properties.

The curing stimulus may be any chemical curing agent or irradiative means to cause a curing reaction, such as, for example chemical hardeners, UV, IR, electron beam and heat. Preferably the initial cure to cause the partially cured adduct may be provided by a chemical hardener.

The sensor may sense, store and/or provide deformation information (e.g. data).

The apparatus may comprise more than one bridge module, and wherein at least two bridge modules each comprise a sensor.

At least one mobile bridge module may comprise at least two sensors at different locations of the bridge module.

The apparatus may comprise more than one bridge module, and wherein at least two bridge modules each comprise at least two sensors at different locations of the respective bridge module.

An orientation of each of the one or more mobile bridge modules may be changeable (while still resulting in a functional module, in use); and/or the apparatus might comprise a plurality of mobile bridge modules, and the position of at least two of the modules might be interchangeable (while still resulting in functional modules, in use).

Each sensor may be arranged to store and/or transmit deformation information in the form of one or more of: sensed deformation; sensed deformation range, in terms of maximum and minimum deformation; and/or sensed deformation range, in terms of maximum and minimum deformation in a loading cycle; and/or cumulative deformation; and/or a count of deformation events that exceed a zero or non-zero threshold value.

The deformation information may include timing information linked to the or each (e.g. sensed) deformation.

Each sensor may be arranged to change from a relatively passive deformation sensing state to a relatively active deformation sensing state when a deformation exceeds a zero or non-zero threshold value.

Each sensor may be arranged to be interrogated in order to obtain deformation information from the sensor.

Each sensor may comprise or be connection with an indicator. The indicator may be controllable to change state dependent on the sensed deformation.

Each sensor may be bonded to a respective bridge module, optionally as part of a non-destructive reinforcement of that module.

Each sensor may be battery powered.

The structural health monitoring may be observed over substantially all of a composite structure or at points of high stress or strain or known failure points. Typical microstructure damage in composites may comprise matrix cracking, fibre-matrix debonding, fibre failures and fibre pull-out; these may all have an impact on the thermal transport within the composite due to increased interfacial scattering and by creation of longer effective thermal path lengths.

A composite according to the invention may conveniently be made by any known composite manufacturing processes, such as for example, wet layup; pre-pregging; resin infusion or resin transfer moulding or vacuum assisted resin transfer moulding may all be used. Use of such well known techniques allows great flexibility in form and size of the composite thus formed. One advantage of using these commonly used techniques is that composites of the invention may be employed to replace already existing parts made by the same techniques but not having the advantage of having structural health monitoring formed integral therewith.

Composites according to the invention may be used in new designs or to replace worn, damaged or outdated parts of any items which can be manufactured of composite material. For example, vehicles, whether land, air, space or water born, may have parts manufactured with integral SHM (structural health monitoring), according to the invention.

According to a second aspect of the invention, there is provided a method of managing (e.g. re-configuring in some way) a composite mobile bridge apparatus, the apparatus comprising: one or more composite mobile bridge modules; and a plurality of sensors for sensing a deformation of the one or more composite mobile bridge modules, the method comprising managing the composite mobile bridge apparatus based on deformation information obtained using the plurality of deformation sensors.

The managing might comprise one or more of: reorienting one or more composite mobile bridge modules; and/or repositioning one or more composite mobile bridge modules; and/or maintaining one or more composite mobile bridge modules; and/or replacing one or more composite mobile bridge modules.

For a better understanding of the invention, and to show how embodiments of the same may be carried into effect, reference will now be made, by way of example, to the accompanying diagrammatic Figures in which:
Figure 1 schematically depicts a side view of a mobile bridge apparatus;
Figure 2 schematically depicts a plan view of the mobile bridge apparatus of Figure 1;
Figure 3 schematically depicts a perspective view of the mobile bridge apparatus of Figures 1 and 2;
Figure 4 schematically depicts installation of sensors for sensing a deformation of one or more bridge modules of the mobile bridge apparatus of Figure 1, in accordance with an example embodiment;
Figure 5 shows the mobile bridge apparatus of Figure 1 provided with sensors for sensing a deformation of the one or more mobile bridge modules, in accordance with an example embodiment;
Figure 6 schematically
Figure 7 schematically depicts management of a mobile bridge apparatus in accordance with an example embodiment, in terms of re-positioning one or more mobile bridge modules of the mobile bridge apparatus;
Figure 8 schematically depicts management of a mobile bridge apparatus in accordance with an example embodiment, in terms of re-orienting one or more mobile bridge modules of the mobile bridge apparatus; and
Figure 9 schematically depicts management of a mobile bridge apparatus in accordance with an example embodiment, in terms of replacing one or more mobile bridge modules of the mobile bridge apparatus.

The Figures have not been drawn to any particular scale, and are simply given as an aid to understanding concepts underlying and/or representing the invention. Also, the same features appearing in different Figures have been given the same reference numerals for consistency and clarity.

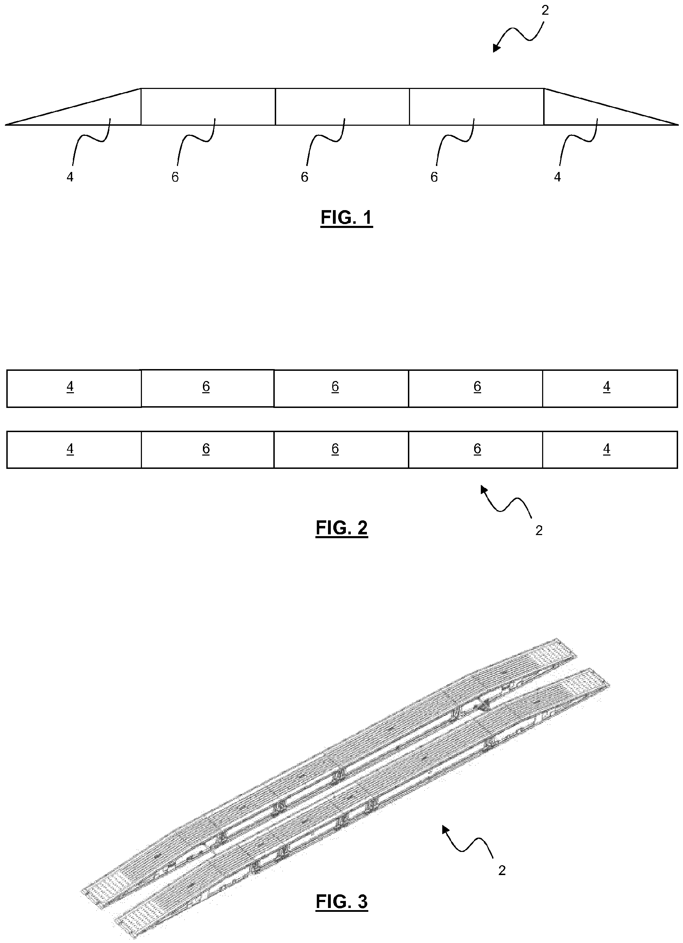

Figure 1 schematically depicts a mobile bridge apparatus 2 in side view. The apparatus comprises ramp modules 4 connected together by inter-ramp modules 6. The modules 4, 6 are in connection with one another. The nature of the connection will depend on the nature of the specific type and use of the mobile bridge apparatus. For example, the modules 4, 6 may be in some way hingedly or foldably attached to one another for use in convenient deployment of the mobile bridge apparatus 2, for example from a vehicle or the like. In another example, the modules may be connected to one another via one or more cables or other elongate connectors. Other connection arrangements are of course possible.

The mobile bridge apparatus 2 may be used in a wide variety of applications, and might be used by people, animals, vehicles, and so on. The exact construction of the mobile bridge apparatus 2 may depend on its intended use. For example, there may be variations in terms of materials, structure, and so on. Many mobile bridge apparatus used to carry vehicles are made from an at least partial aluminium construction (e.g. a main frame or main structure of the apparatus), since aluminium is light but strong.

Figure 2 shows a plan view of the apparatus of Figure 1. The plan view reveals that the mobile bridge apparatus 2 may comprise two substantially parallel trains or series of modules 4, 6, for example for supporting different wheel or tracks of different sides of a vehicle. Although not shown in the Figure, the parallel trains or series of modules 4, 6 may be separate from one another, or attached to one another, and deployed at the same time, or separately. In another example, a parallel train or series of modules 4, 6 may not be required. That is, a single train or series of modules may suffice.

Figure 3 shows the mobile bridge apparatus in perspective view, to give some more context to the overall look and function of the apparatus 2.

As already discussed above, there are numerous problems and disadvantages associated with allocating a pre-determined lifetime to a mobile bridge apparatus 2. Such a predetermined assessment and setting of the lifetime of the mobile bridge apparatus can lead to potentially dangerous situations if the mobile bridge apparatus is used more than assumed in the setting of a lifetime, or can lead to under use of the mobile bridge apparatus and related resources if the lifetime is set too conservatively. Generally, then, overall management of the mobile bridge apparatus could be greatly improved upon.

According to an example of implementation of the present invention, the problems discussed above can at least partially obviated or mitigated. In accordance with an example embodiment, in a mobile bridge apparatus comprising one or more mobile bridge modules, there is provided a plurality of sensors for sensing a deformation of the one or more mobile bridge modules. Deformation has an association with fatigue of a bridge, and thus its general use in an overall lifetime, or its use that can be used to determine that lifetime. The deformation, for example, might comprise or be related to stress or strain.

The invention is subtle but important, and extremely advantageous. By sensing deformation, the fatigue and real time life span of the mobile bridge module can be determined, or at least estimated more accurately, thus avoiding the predetermined lifetime assessments of previously existing mobile bridge apparatus and related methods. That is, the module and/or bridge as a whole can have its use, and thus 'age' determined in real-time. This might be referred to as "lifing" of the module, or a part thereof.

The use of a plurality of sensors is, again, subtle but important. Using one or more sensors on each of more than one more module allows different modules of the apparatus to have their use and thus lifetime independently monitored in some way. This means that different modules can be managed in different ways, for example replacing a particular module, as opposed to a whole bridge, or even repositioning modules within the bridge apparatus, again leading to a better use of mobile bridge resources. Using more than one sensor for any one module gives additional information in the form of deformation at different locations of that module, which may allow for additional management functionality, for example allowing the module to be rotated to allow for further use of that module without failure risk to the mobile bridge apparatus as a whole.

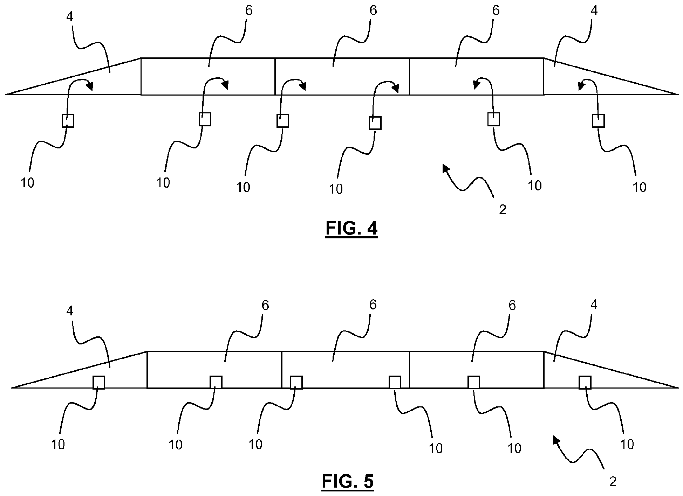

Figure 4 shows the mobile bridge apparatus 2 as already shown and described in reference to Figure 1. Figure 4 also shows the installation of deformation sensors in, or for, each of the modules 4, 6. One inter-ramp module 6 is provided with two sensors 10.

Figure 5 shows the bridge apparatus with the installed sensors 10. In a slightly different embodiment, but employing the same principles, Figure 5 could be viewed as an entirely new mobile bridge apparatus constructed with the sensors 10. That is, and in other words, the sensors 10 could be included during the construction of the mobile bridge apparatus and/or its modules, or the sensors 10 could be applied subsequently, for example in a retro-fitted manner.

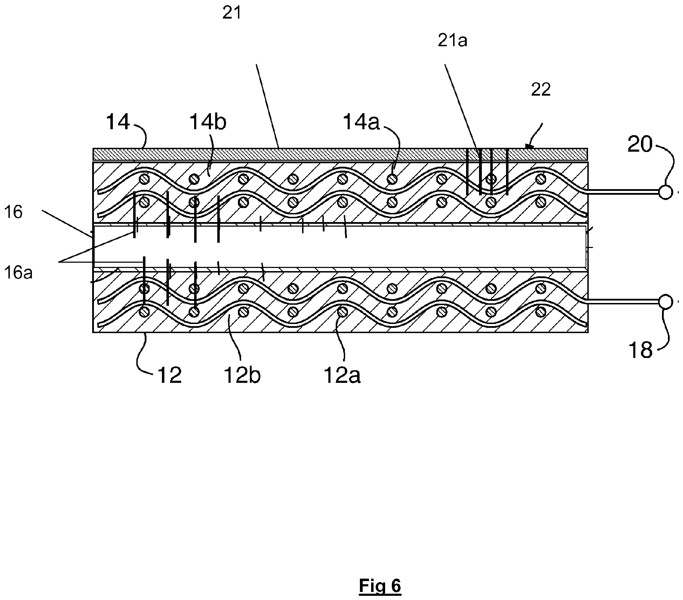

The sensors 10 can be installed in any particular manner, for example by being part of or attached to a part of the respective module 4, 6. Figure 6 shows a convenient way of retro-fitting the sensors 10, while at the same time achieving additional functionality.

Figure 6 shows shows an example of a composite, depicted generally at 22, comprising a first composite structure 12 which is bonded by a hybrid metal joint to a metal component such as a connector 16, with projections 16a that projection out of the connector. The connector 16 may be sandwiched between the first and a second composite structure 14. The first and second composites 12, 14 contain a sensor elements 18 and 20.

Each of the first and second composites 12, 14 are formed as a composite material comprising suitable fibre plys 12b and 14b in a binder matrix 12b, 14b. The composites may also comprise filler materials 12a, 14a in respective binder matrices 12b, 14b.

The composite of the invention can be manufactured in different ways. For example, it is possible to fully manufacture each of the first and second composite structures and then bond the two together via a bonded joint. Alternatively, each structure may be produced separately, but with partial cure of the binder matrices, so that the structures can be co-cured together. The entire structure may be formed with a common binder matrix, for example in a wet lay up process, to provide a 'monolithic' structure for the component.

On the second composite layer 14 is metal road surface 21, which may comprise projections of pins 21a, which allow a hybrid joint to be formed with composite 14, and the projections 21 a penetrate the fibre ply 14b.

So far, the sensors and their function have been only generically defined and described. A more detailed discussion of the sensors will now follow.

A sensor could be a unit or the like that is arranged to sense deformation of the mobile bridge module at a particular location. Alternatively or additionally, the sensor could be a unit or the like that comprises a network or similar of sub-sensors, information from which sub-sensors at (by definition) different locations can be independently obtained and processed or the like. Alternatively, multiple sensors at different locations might generally be described as a single sensor in at least some examples. So, the sensor could comprise sub-sensors, or could be understood as a single sensor that senses deformation at one or more different locations. In another example, sensing at different location might be undertaken by, or understood to be by, different sensors.

Sensing might be achieved in one or more axis, using one or more sensors.

The sensors have been described as sensing deformation of the mobile bridge module. The deformation could be dynamic and/or static deformation, for example comprising or being related to stress or strain. The deformation could be elastic, plastic or a fracture, although a plastic or fracture deformation will likely not be present in normal use. The sensing of strain may be particularly important in the determination of the fatigue of the module, and thus useful in determining a real indication of the age, life or lifespan of the particular module, which includes an indication of the overall use or usage of the module.

The sensors might take any suitable form. The suitability of the form might be dependent on the environment in which the mobile bridge apparatus is to be used. In any event, examples sensors might be based on optical fibre technology, magnetorestrictive technology, shape memory alloy technology and so on. A preferred type of sensor might be or comprise an electrical (as opposed to optical) strain gauge. Such an electrical strain gauge is a mature and robust technology, and is well suited to environments in which a mobile bridge might be used, for example a military environment. Also, being a mature technology, commercial-off-the-shelf sensors may be used, which might keep installation and maintenance costs down.

Typically, each sensor will be battery powered in some way, so that there is no need to provide a cabled power supply to the mobile bridging apparatus, which might otherwise compromise mobility. In order to conserve battery life, each sensor may be arranged to change from relatively passive state to a relatively active state (e.g. a deformation sensing state) when a deformation exceeds a zero or non-zero threshold value. For instance, this might avoid the sensor sensing (and/or storing or transmitting) relatively minor vibrations or movements of the bridge, and ensure that only significant deformation of the module is sensed for use/age/life determining purposes.

Each sensor may be arranged to store and/or transmit deformation information using a storage and transmitter, respectively.

Deformation information (e.g. data) may take the form of one or more of (which includes a combination of any one or more of) sensed deformation; sensed deformation range, in terms of maximum and minimum deformation (e.g. overall, or within a certain period of time); and/or sensed deformation range, in terms of maximum and minimum deformation in a loading cycle (e.g. when an object, or one or more objects, or the like, passes over the mobile bridge apparatus to cause deformation in or of the module); and/or cumulative deformation (e.g. a total plastic deformation, or a total of repeated elastic deformations); and/or a count of deformation events that exceeded zero or non-zero threshold value. In different ways, depending on different ways in which the deformation information may be used, each of these types of information may be particularly useful. This information might be even more useful when deformation information includes timing information linked to the or each deformation, for example a time or date when the deformation occurred, or a period of time over which the deformation occurred, and so on. The information might also include temperature (e.g. using a temperature sensor) and/or location (e.g. via GPS or similar).

In addition to, or as part of, using deformation information to determine an age/life of a bridge module, other uses are possible. The information could be used to determine severity of one off impact events, for example a vehicle which crosses the bridge or module at speed. The information could be used to determine if the mobile bridge or its modules has/have been seated, laid down or deployed in a favourable configuration - e.g. to determine if the load is spread well across those modules that are in contact with the ground. The information could be used to determine if reinforcement, as discussed above, is required. The deformation information discussed previously may be useful in isolation or in combination, or may be even more useful when processed using particular algorithms to determine a real-time indication of the age or lifespan of the mobile bridge module, and/or groups of modules, and/or the mobile bridge apparatus as a whole.

In connection with prior art mobile bridge apparatus and related management methods, it may be known that after a typical period of use under typical circumstances, a mobile bridge module may be somewhere within the range of 50%-75% of its pre-determined total lifespan. However, the actual usage of the module may not correspond to the actual life of the module being in this range, and even if in this range, there is still some significant room for error. As already discussed in some detail above, the error can lead to a dangerous situation, or under-use of a module. Using much more accurate sensing of the deformation in real-time avoids these problems, for example allowing a much more accurate current age of the module to be determined and/or indicated - e.g. 63%. For example, algorithms may be employed that can take deformation data and output an indication of overall use relative to a total/typical lifetime. The age will change depending on use. It is known that maximum and minimum deformation in a loading cycle is most important in accurately determining overall use and age of the module, as opposed to, for instance, an average or total static or dynamic deformation.

As discussed previously, each sensor may store and/or transmit deformation information, such as, for example via Bluetooth, cellular or wifi. Each sensor may have this capability in isolation, or may have this capability by being in connection with one or more peripheral or central storage or transmission units. For instance, the information may be stored locally on each sensor, and each centre can be interrogated continuously or periodically by an external, remote management unit or similar. Alternatively and/or additionally, each sensor may transmit information to such a remote management unit or similar, again periodically or continuously (e.g. during a loading cycle).

An advantage of implementing the deformation sensors in the manner described is that a near real-time understanding of the usage of the mobile bridge modules, and thus their age/lifespan can be undertaken, which allows the mobile bridge module to be far more accurately used and managed etc. At least a part of this management might be undertaken remotely, for example by interrogating or otherwise obtaining information from the sensors in order to manage the bridge modules or overall bridge apparatus, for example in terms of the positioning of its modules, the orientation of its modules, or the maintenance or replacement of its modules. Management might take place in real-time, or periodically when a bridge is subjected to deployment, or preparation for such deployment.

Management might be undertaken more locally, and perhaps even in-situ in the field. Local, and more hands-on management, might be undertaken more readily, if and when each sensor comprises or is in connection with an indicator. The indicator might be controllable to change state dependent on the sensed deformation. For example, the indicator might be visual in nature, and indicate when an age of the module, or part thereof, or more crudely when a particular lifetime of the module or part thereof has been reached or exceeded. If multiple sensors are used on a module, an indicator for that module may be useful in orienting or re-orienting that module, for example indicating a direction in which the module should be oriented to increase overall lifetime. An indicator may be used or controlled in some way relative to other indicators. For example, multiple indicators on multiple modules may be used to provide an ordering of modules in the apparatus as a whole. This might be at least party achieved via communication between sensors, or communication via a remote management unit.

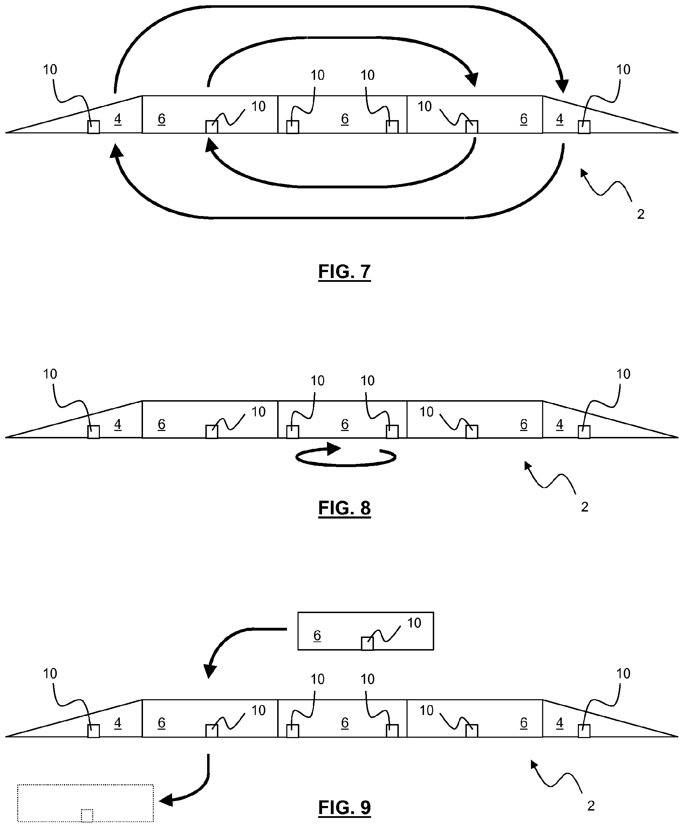

Figure 7 shows how the mobile bridge apparatus 2 can be managed (which might be described as configured or re-configured) by re-positioning ramp modules 4 and/or inter-ramp modules 6. For instance, such re-positioning might be needed or useful if it is noticed that one ramp module 4 is being fatigued more readily than another ramp module 4, or that an inter-ramp module 6 is being fatigued more than another inter-ramp module 6.

Figure 8 shows how an inter-ramp module 6 may be re-oriented if the fatigue of the module 6 is asymmetric. The reorienting might take the form of simply rotating the module 6 180° if the module has such structural symmetry.

If a bridge module 6 comprises more than one sensor 10, each of the two or more sensors will be located in some way to provide orientational indications, hints or guidance as to the orientation or suitable orientation of the module 6. For instance, sensors may be located on substantially opposite portions, or sides, or faces, or components of the respective module 6. More than two sensors 10 may be used, for example one in each corner, at each side, or face of the module, may give even more accurate results as to the asymmetric fatiguing of the module 6.

Figure 9 shows how an inter-ramp module 6 may be removed for maintenance or replacement in accordance with the determined lifetime or age of the module 6.

The invention is advantageously applied such that the age or current life of individual modules within a mobile bridge apparatus can be more accurately determined. The invention is even more useful if an orientation of one or more of the mobile bridge modules is changeable and/or, when the apparatus comprises a plurality of mobile bridge modules, the position of at least two of the modules is interchangeable, since this allows for the flexibility of re-positioning and/or re-orienting to be used in conjunction with the more accurate determination of the age of the bridge module. To that extent, some, most or all of the bridge modules may comprise at least one strain sensor, or more than one sensor (which includes sensing location, as discussed above) if orientation information is required.

The invention as a whole, then, is synergistic in combining the benefits of the modular nature of the components of the mobile bridge apparatus, which can be and typically are re-configurable by re-positioning/re-orienting, together with the more advanced and accurate aging information provided in accordance with the invention, which allows the re-configuring (management) to be taken to a far more useful extent than currently possible.

The mobile bridge described herein is typically employed in (i.e. is capable of, and configured to be used in) a spanning capacity, for example spanning a gap or similar. Therefore, the bridge is able to support its own weight while still providing the spanning function. This is in contrast with, say, a pontoon bridge, where water supports the pontoon bridge. The bridge described herein will typically be free of any inter-gap supports, for example legs or otherwise, extending from the main bridging surface to a floor of the gap. That is, the bridged described herein is supported only on either side of the gap. The modules described herein are typically of a construction, for example a predominantly metallic construction, which is designed specifically for such a gap-spanning function. The construction is such that each module/the bridge as a whole would be incapable of floating in water without dedicated and separate floats or similar.

Although a few preferred embodiments have been shown and described, it will be appreciated by those skilled in the art that various changes and modifications might be made without departing from the scope of the invention, as defined in the appended claims.

## Claims

1. A composite mobile bridge apparatus, comprising:
at least two composite mobile bridge modules; wherein the modules are formed from fibre reinforced polymer composites, wherein the composite comprises a fibre ply in a cured binder matrix.

2. The apparatus of claim 1, wherein the apparatus comprises a sensor for sensing a deformation of the mobile bridge modules.

3. The apparatus of claim 2, wherein the mobile bridge module comprises a plurality of sensors at different locations of the composite mobile bridge module.

4. The apparatus of claims 2 and 3, wherein the at least two mobile bridge modules comprises a plurality of ramp modules, and/or a plurality of inter-ramp modules, and wherein each ramp module, and/or each inter-ramp module, comprises a plurality of sensors.

5. The apparatus of claim 2 to 4, wherein the sensor is embedded in, woven in, deposed on the fibre ply.

6. The apparatus of any preceding claim, wherein the mobile bridge module comprises a metal connector, said connector is bonded to the composite module by an adhesive or a hybrid joint which is integral with the fibre ply.

7. The apparatus of claim 6, wherein a first mobile bridge module comprises a first connector capable of co-operative engagement with a second connector on a second mobile bridge module, wherein the first and second connectors are metal.

8. The apparatus according to any one of the preceding claims, wherein the composite bridge module comprises a metal road surface, which provides a surface for a vehicle.

9. The apparatus according to claim 8, wherein the metal road surface is attached to the composite bridge by an adhesive or hybrid joint which is integral with the fibre ply.

10. The apparatus of any one of claims 2 to 9, wherein each sensor is arranged to store and/or transmit deformation information in the form of one or more of:
sensed deformation;
sensed deformation range, in terms of maximum and minimum deformation; and/or
sensed deformation range, in terms of maximum and minimum deformation in a loading cycle; and/or
cumulative deformation; and/or
a count of deformation events that exceed a zero or non-zero threshold value.

11. The apparatus of any claim 2 to 10, wherein each sensor is arranged to change from a relatively passive deformation sensing state to a relatively active deformation sensing state when a deformation exceeds a zero or non-zero threshold value.

12. The apparatus of any claim dependent on claims 2 to 11, wherein each sensor is arranged to be interrogated in order to obtain deformation information from the sensor.

13. The apparatus of any claim 2 to 12, wherein each sensor comprises or is in connection with an indicator, the indicator being controllable to change state dependent on the sensed deformation.

14. A method of managing a composite mobile bridge apparatus, the apparatus comprising:
one or more composite mobile bridge modules; and
a plurality of sensors for sensing a deformation of the one or more composite mobile bridge modules,
the method comprising managing the mobile bridge apparatus based on deformation information obtained using the plurality of deformation sensors.
